# EUROPÄISCHE PATENTANMELDUNG

(11) **EP 1 460 022 A1**
(43) Veröffentlichungstag der Anmeldung: **22.09.2004**
(21) Anmeldenummer: 03405194.6
(22) Anmeldetag: 20.03.2003
(51) Int. Cl.: B66B 11/04, H02K 7/10

(54) **Antriebseinheit für einen aufzug**

(71) Anmelder: INVENTIO AG, CH-6052 Hergiswil (CH)
(72) Erfinder: Ammon, Urs, 6030 Ebikon (CH); Cholinski, Andrzej, 6030 Ebikon (CH); Lüthi, Christian, 6003 Luzern (CH)

(57) **Zusammenfassung**

Bei dieser Antriebseinheit (1) wird eine Treibscheibe (7) mittels einer Welle (15) getragen, wobei die Welle (15) an einem ersten Lager (16) und an einem zweiten Lager (17) drehbar gelagert ist. Auf ein erstes freies Ende (15.1) der Welle (15) ist ein erster Rotor (9.1) eines ersten Motors (9) aufgesetzt. Der erste Stator (9.2) ist mittels eines ersten Käfiggehäuses (9.3) an einem ersten Lagerschild (3) angeordnet. Sinngemässes gilt für ein zweites freies Ende (15.2) der Welle (15), einen zweiten Stator (10.2) und ein zweites Käfiggehäuse (10.3) eines zweiten Motors (10).

## Beschreibung

Die Erfindung betrifft eine Antriebseinheit für einen Aufzug bestehend aus Motoren und einer Treibscheibe, wobei Treibscheibe und Motoren von an einem Maschinenrahmen angeordneten Lagerschildern getragen werden.

Aus der EP Patentanmeldung 0 565 893 ist eine Antriebseinheit für Aufzüge bekannt geworden, die zwischen zwei Lagerschildern eine Treibscheibe und mechanisch hintereinander schaltbare Elektromotoren aufweist. Die hintereinander starr gekoppelten Aussenläufermotoren werden mittels einer Gleichlaufregelung synchronisiert. Die Treibscheibe und die Motoren stützen sich auf einer mittels der Lagerschilder getragenen starren Achse ab.

Ein Nachteil der bekannten Einrichtung liegt darin, dass die Kräfte ungünstig verteilt auf die starre Achse einwirken. Die von der Treibscheibe ausgehenden Hauptkräfte müssen weitgehend von einem Lagerschild aufgenommen werden. Ausserdem bedingen die hintereinander geschalteten Elektromotoren grosse Lagerschildabstände.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und einen Aufzugsantrieb zu schaffen, der kompakt ist.

Die durch die Erfindung erreichten Vorteile sind im wesentlichen darin zu sehen, dass eine Antriebseinheit mit kurzer Welle und somit eine kleine Baulänge der Antriebseinheit realisierbar ist. Weiter vorteilhaft ist, dass die Treibscheibe beidseitig gelagert ist und die Elektromotoren symmetrisch zur Treibscheibe anbringbar sind, die Antriebseinheit ist damit im Höchstleistungsbereich einsetzbar.

Anhand der beiliegenden Figuren wird die vorliegende Erfindung näher erläutert.

Es zeigen:
- Fig. 1: eine dreidimensionale Darstellung der erfindungsgemässen Antriebseinheit,
- Fig. 2: einen Schnitt durch die Antriebseinheit entlang ihrer Welle,
- Fig. 3 und Fig. 4: eine elektrische Versorgung der Antriebseinheit.

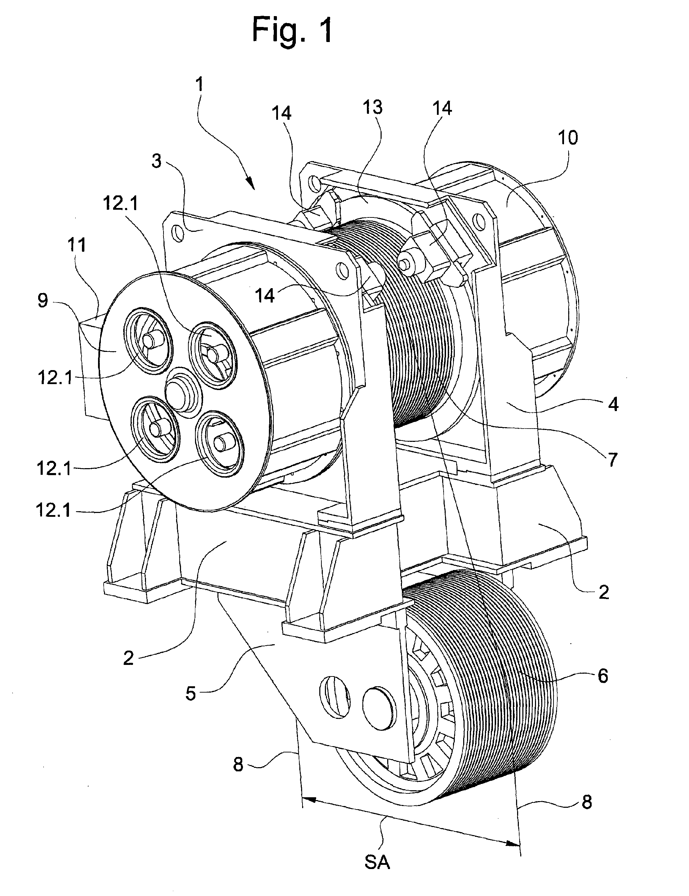

Fig. 1 zeigt die fertig zusammengebaute Antriebseinheit 1, im wesentlichen bestehend aus einem Maschinenrahmen 2, an dem ein erstes Lagerschild 3 und ein zweites Lagerschild 4 angeordnet sind. Ausserdem ist am Maschinenrahmen 2 ein Gegenrollenanbau 5 mit einer Gegenrolle 6 angeordnet. Die Lagerschilder 3,4 tragen eine Treibscheibe 7, über die Seile 8 geführt sind, wobei die Seile 8 auch über die Gegenrolle 6 geführt sind. Mit SA ist der zwischen einer Aufzugskabine und einem Gegengewicht notwendige Seilstrangabstand bezeichnet.

Am ersten Lagerschild 3 ist ein erster Motor 9 und am zweiten Lagerschild ist ein zweiter Motor 10 angeordnet. Jeder Motor 9,10 ist mit einem Anschlusskasten 11 versehen und mit Lüftern 12.1,12.2 ausgerüstet. Die Treibscheibe 7 weist je Seite eine Bremsscheibe 13 auf, an der zwei Scheibenbremsen 14 angreifen.

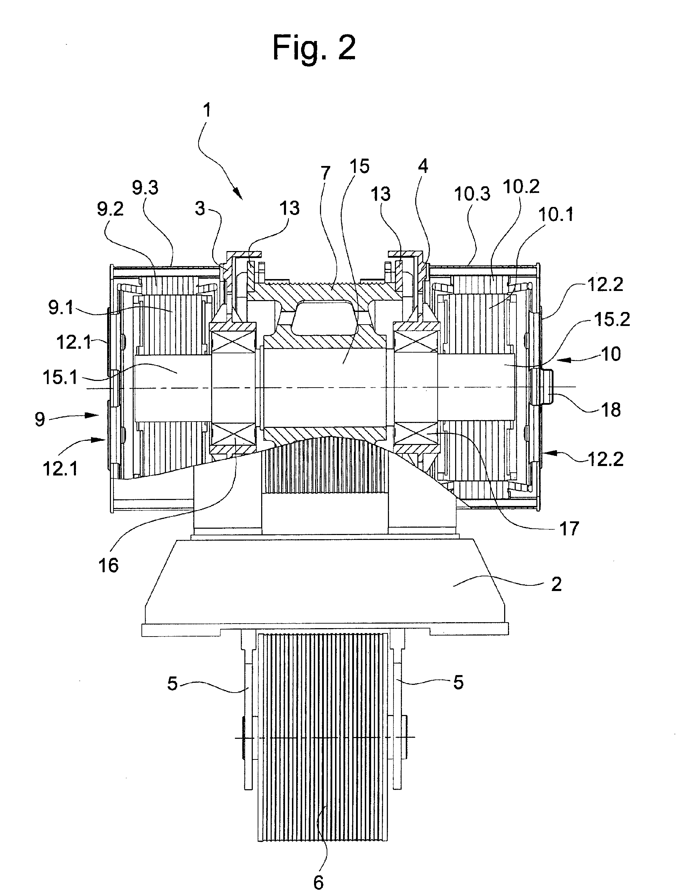

Fig. 2 zeigt einen Schnitt durch die Antriebseinheit 1. Die Treibscheibe 7 wird mittels einer Welle 15 getragen, wobei die Welle 15 an einem ersten Lager 16 des ersten Lagerschildes 3 und an einem zweiten Lager 17 des zweiten Lagerschildes 4 drehbar gelagert ist. Ein erstes freies Ende der Welle 15 ist mit 15.1 und ein zweites freies Ende der Welle 15 ist mit 15.2 bezeichnet. Auf das erste freie Ende 15.1 der Welle 15 ist ein erster Rotor 9.1 des ersten Motors 9 aufgesetzt. Ein erster Stator 9.2 ist mittels eines ersten Käfiggehäuses 9.3 am ersten Lagerschild 3 angeordnet. Sinngemässes gilt für das zweite freie Ende 15.2, einen zweiten Rotor 10.1, einen zweiten Stator 10.2 und ein zweites Käfiggehäuse 10.3 des zweiten Motors 10. Zur Drehzahlerfassung ist ein mit der Welle 15 koppelbarer Tachogenerator 18 vorgesehen.

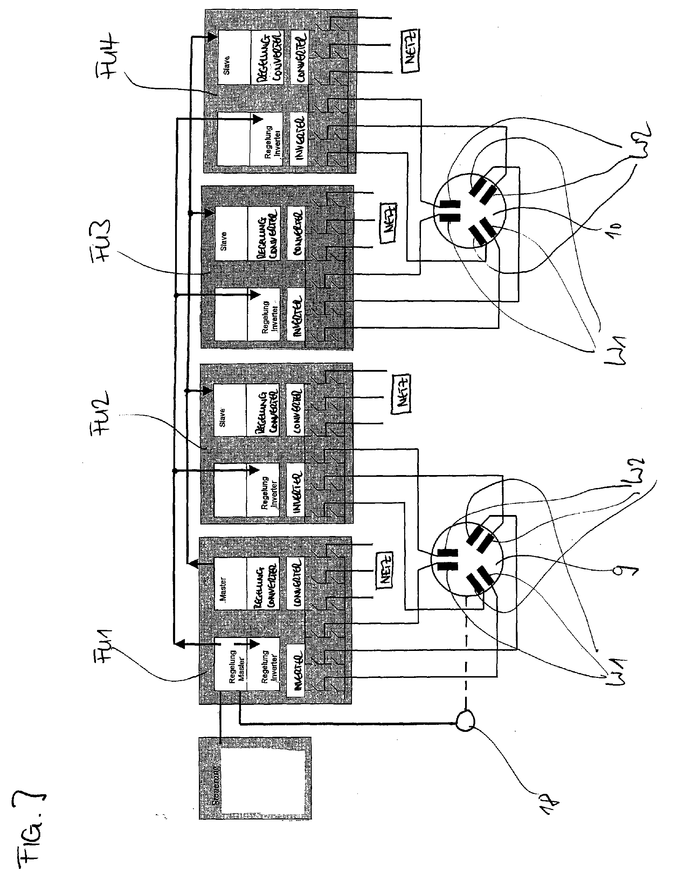

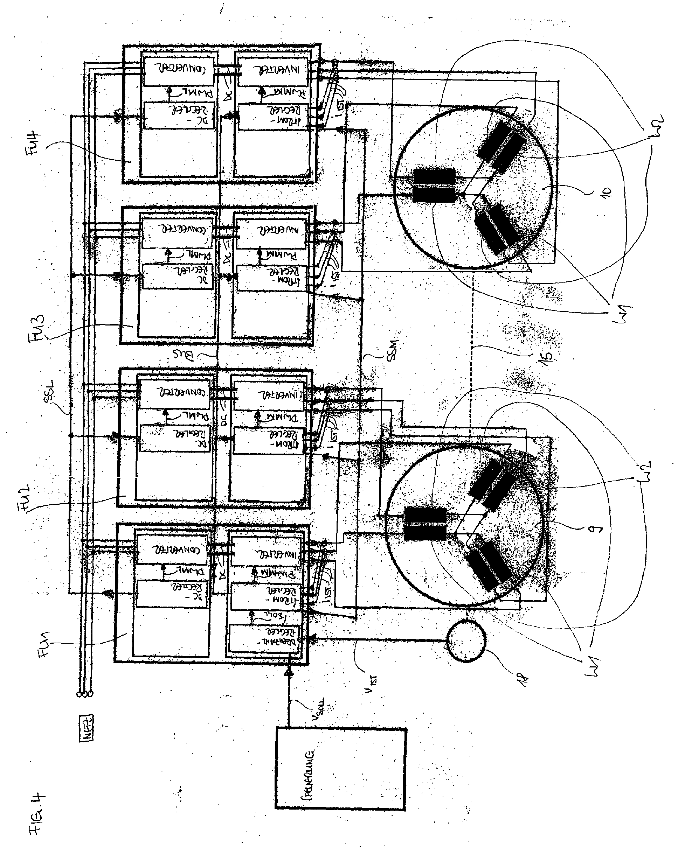

Fig. 3 und Fig. 4 zeigen eine elektrische Versorgung der Antriebseinheit 1 bzw. der Motoren 9,10. Die Motoren 9,10 sind dreiphasig ausgebildet und weisen je einen ersten Wicklungssatz W1 und einen zweiten Wicklungssatz W2 auf, wobei die Wicklungen des einen Satzes mit den entsprechenden Wicklungen des anderen Satzes mechanisch parallel geschaltet sind. Der erste Wicklungssatz W1 des Motors 9 ist an den Ausgang eines Frequenzumrichters FU1 angeschlossen. Der zweite Wicklungssatz W2 des Motors 9 ist an den Ausgang eines Frequenzumrichters FU2 angeschlossen.

Der erste Wicklungssatz W1 des Motors 10 ist an den Ausgang eines Frequenzumrichters FU3 angeschlossen. Der zweite Wicklungssatz W2 des Motors 10 ist an den Ausgang eines Frequenzumrichters FU4 angeschlossen. Die einen Enden eines jeden Wicklungssatzes W1,W2 sind in Sternschaltung zusammengefasst. Die Ausgänge der Frequenzumrichter FU1,FU2,FU3,FU4 müssen systembedingt galvanisch getrennt zusammengeschlossen werden, was mittels mehrerer Wicklungssätze W1,W2 der zu speisenden Motoren 9,10 möglich ist, vorausgesetzt dass die Motoren 9,10 mechanisch starr über die Welle 15 gekoppelt sind.

Der Frequenzumrichter FU1 ist massgebend für die übrigen Frequenzumrichter FU2,FU3,FU4, wobei die Frequenzumrichter im Master/Slave Modus arbeiten. Der Frequenzumrichter FU1 bestimmt aufgrund des Drehzahlistwertes v_{IST} des Tachogenerators 18 und aufgrund des Drehzahlsollwertes v_{SOLL} der Aufzugssteuerung STEUERUNG die Vorgaben für die Inverterregelung. Der Frequenzumrichter FU1 macht auch die Vorgaben für die Converterregelung. Der Converter CONVERTER ist ans Netz NETZ angeschlossen und erzeugt abhängig von der Converterregelung die Zwischenkreisspannung DC, an die der Inverter INVERTER angeschlossen ist. Der Drehzahlistwert v_{IST} und der Drehzahlsollwertes v_{SOLL} werden einem Drehzahlregler DREHZAHLREGLER zugeführt, der den Stromsollwert i_{SOLL} der Motoren 9,10 bestimmt. Der Strom der dreiphasigen Wicklungssätze W1,W2 wird je Phase erfasst und als Stromistwert i_{IST} dem Stromregler STROMREGLER zugeführt, der aus dem Stromsollwert (Anteil des Stromsollwertes i_{SOLL}) und dem Stromistwert i_{IST} die Steuersignale PWMM für die Schalter des an der Zwischenkreisspannung DC angeschlossenen Inverters INVERTER erzeugt. Die Stromregler STROMREGLER und Inverter INVERTER der übrigen Frequenzumrichter FU2,FU3,FU4 sind aufbaumässig und
funktionell vergleichbar mit dem Master Frequenzumrichter FU1. Die Vorgabe der Amplitude des Stromsollwertes für die Stromregler STROMREGLER der Frequenzumrichter FU2,FU3,FU4 erfolgt über den bidirektionalen Bus BUS. Über diesen Bus BUS erfolgt auch die übrige Kommunikation zwischen den Frequenzumrichtern FU1,FU2,FU3,FU4. (Errorhandling, interne Überwachung, Identifikation der Frequenzumrichter, etc.).

Der Master Frequenzumrichter FU1 bestimmt mittels des Drehzahlreglers DREHZAHLREGLER den Gesamtstrom i_{SOLL}, der auf alle Frequenzumrichter FU1,FU2,FU3,FU4 aufgeteilt wird. Der unterlagerte Stromregler STROMREGLER arbeitet beispielsweise nach dem Prinzip der Vektorregelung, wobei die Übertragung des Transformationswinkels des Stromsollwertes vom Master Frequenzumrichter FU1 zu den Slave Frequenzumrichter FU2,FU3,FU4 über den unidirektionalen Bus SSM erfolgt.

Die Zwischenkreisspannung DC wird erzeugt vom Converter CONVERTER, der an das dreiphasige Netz NETZ angeschlossen ist. Die Schalter des Converters CONVERTER werden mittels Steuersignalen PWML gesteuert, die vom Converterregler DC REGLER erzeugt werden. Die Converterregler DC REGLER und Converter CONVERTER der übrigen Frequenzumrichter FU2,FU3,FU4 sind aufbaumässig und funktionell vergleichbar mit dem Master Frequenzumrichter FU1, wobei die Synchronisation der Converter CONVERTER der Frequenzumrichter FU2,FU3,FU4 mittels eines Taktsignales des Frequenzumrichters FU1 über den unidirektionalen Bus SSL erfolgt.

## Patentansprüche

1. Antriebseinheit (1) für einen Aufzug bestehend aus Motoren (9,10) und einer Treibscheibe (7), wobei Treibscheibe (7) und Motoren (9,10) von an einem Maschinenrahmen (2) angeordneten Lagerschildern (3,4) getragen werden,
**dadurch gekennzeichnet,**
**dass** die Treibscheibe (7) mittels einer Welle (15) getragen ist, wobei die Welle (15) an einem ersten Lager (16) eines ersten Lagerschildes (3) und an einem zweiten Lager (17) eines zweiten Lagerschildes (4) drehbar gelagert ist und freie Enden (15.1,15.2) aufweist, an denen die Motoren (9,10) angeordnet sind.

2. Antriebseinheit nach Anspruch 1,
**dadurch gekennzeichnet,**
**dass** am ersten freien Ende (15.1) der Welle (15) ein erster Rotor (9.1) eines ersten Motors (9) angeordnet ist und ein erster Stator (9.2) des ersten Motors (9) mittels eines ersten Käfiggehäuses (9.3) am ersten Lagerschild (3) angeordnet ist und
**dass** am zweiten freien Ende (15.2) der Welle (15) ein zweiter Rotor (10.1) eines zweiten Motors (10) angeordnet ist und ein zweiter Stator (10.2) des zweiten Motors (10) mittels eines zweiten Käfiggehäuses (10.3) am zweiten Lagerschild (4) angeordnet ist.

3. Antriebseinheit nach den Ansprüchen 1 oder 2,
**dadurch gekennzeichnet,**
**dass** an der Treibscheibe (7) Bremsscheiben (13) angeordnet sind, an denen Scheibenbremsen (14) angreifen.

4. Antriebseinheit nach einem der vorhergehenden Ansprüche,
**dadurch gekennzeichnet,**
**dass** die Motoren (9,10) an Frequenzumrichter (FU1,FU2,FU3,FU4) angeschlossen sind, die im Master/Slave Modus arbeiten.

5. Antriebseinheit nach Anspruch 4,
**dadurch gekennzeichnet,**
**dass** der Master Frequenzumrichter (FU1) einen Gesamtstrom (i_{SOLL}) vorgibt, der auf alle Fequenzumrichter (FU1,FU2,FU3,FU4) aufgeteilt wird, wobei je Frequenzumrichter ein Stromregler (STROMREGLER) den Strom aufgrund des Stromsollwertes und des Stromistwertes (i_{IST}) regelt.

6. Antriebseinheit nach einem der Ansprüche 4 oder 5,
**dadurch gekennzeichnet,**
**dass** zur Kommunikation zwischen den Frequenzumrichtern (FU1,FU2,FU3,FU4) mindestens ein Bussystem (SSL,BUS,SSM) vorgesehen ist, über das Stromvorgabesignale, Synchronisationssignale, Identifikationssignale, etc. zwischen den Frequenzumrichtern (FU1,FU2,FU3,FU4) austauschbar sind.
